# EUROPÄISCHE PATENTANMELDUNG

(11) **EP 3 907 145 A1**
(43) Veröffentlichungstag der Anmeldung: **10.11.2021**
(21) Anmeldenummer: 20173756.6
(22) Anmeldetag: 08.05.2020
(51) Int. Cl.: B65B 51/22, B65B 29/02, B29C 65/08

(54) **VERFAHREN ZUR HERSTELLUNG EINER PORTIONENKAPSEL, UND PORTIONENKAPSEL**

(71) Anmelder: Tchibo GmbH, 22297 Hamburg (DE)
(72) Erfinder: MÜLLER, Ralf, 9063 Stein AR (CH)
(74) Vertreter: Frei Patent Attorneys

(57) **Zusammenfassung**

Ein Verfahren zum Herstellen einer Kapsel weist die folgenden Schritte auf:
- Zur-Verfügung-stellen eines Grundkörpers (2) aus einem Kunststoff, mit einem Bodenbereich (5), einer umlaufenden Seitenwand (6) und einem an die umlaufende Seitenwand anschliessenden umlaufenden Grundkörper-Kragen (41);
- Zur-Verfügung-stellen eines Deckels (3) aus einem Kunststoff;
- Befüllen des Grundkörpers (2) mit einem Extraktionsgut;
- Aufsetzen des Deckels (3) auf den Grundkörper (2), so, dass eine Befestigungspartie des Deckels auf dem Grundkörper-Kragen (41) aufliegt; und
- Befestigen des Deckel-Kragens am Grundkörper-Kragen mittels Ultraschallschweissen,

Beim Befestigen des Deckel-Kragens liegt dabei eine innere Oberfläche (33) der Befestigungspartie flächig auf einer Kragenoberfläche (43) des Grundkörper-Kragens auf. Eine mit mechanischen Schwingungen beaufschlagte Sonotrode (50) mit einem Energierichtungsgeber (52) wird gegen eine äussere Oberfläche (34) der Befestigungspartie oder des Grundkörper-Kragens gedrückt, derart, dass durch die Wirkung der mechanischen Schwingungen Kunststoffmaterial des Deckels beziehungsweise des Grundköprer-Kragens an der äusseren Oberfläche zu verflüssigen beginnt.

## Beschreibung

Die Erfindung betrifft die Zubereitung von Getränken oder dergleichen aus einem in einer Kapsel enthaltenen Extraktionsgut, beispielsweise gemahlenem Kaffee. Sie betrifft insbesondere ein Verfahren zum Herstellen einer mit einem Extraktionsgut gefüllten Kapsel sowie eine mit diesem Verfahren hergestellte Kapsel.

Extraktionsgeräte zum Zubereiten von Getränken aus einem in einer Portionsverpackung vorhandenen Extraktionsgut sind beispielsweise als Kaffee-, Espresso- oder auch Teemaschinen bekannt und erfreuen sich nach wie vor steigender Beliebtheit. In vielen entsprechenden Systemen sind die Portionsverpackungen als Kapseln ausgebildet, in denen das Extraktionsgut bspw. luftdicht abgeschlossen ist. Für die Extraktion wird die Kapsel an zwei einander gegenüberliegenden Seiten angestochen. Auf der ersten Seite wird eine Brühflüssigkeit - im Allgemeinen heisses Wasser - eingeleitet. Auf der zweiten Seite wird das Brüherzeugnis aus der Kapsel ausgeleitet. Je nach zuzubereitendem Getränk und System muss dabei im Innern der Kapsel ein recht erheblicher Druck herrschen. Anstelle von Systemen, bei denen die Portionenkapsel angestochen wird, gibt es auch Systeme mit Kapseln, die bereits mit einer Perforation versehen sind, welche bspw. von einer Schutzfolie überdeckt sind, die vor dem Brühprozess abgezogen oder aufgelöst wird.

Als Kapselmaterialien sind insbesondere Aluminium und Kunststoffe, bspw. Polypropylen bekannt geworden. Aluminiumkapseln bringen eine sehr gute Haltbarkeit (Aromaschutz) des Extraktionsguts, sind aber in der Herstellung sehr energieaufwändig. Polypropylenkapseln sind betreffend Energieaufwand und Entsorgung vorteilhaft, stellen aber erhöhte Anforderungen an den Anstechmechanismus und den Aromaschutz. Sowohl Aluminium als auch Kunststoffe sind als Kapselmaterialien in der Kritik, erstere insbesondere wegen dem hohen Energieverbrauch bei der Herstellung, letztere insbesondere wegen der Abfallproblematik.

Aus der WO 2010/118543 ist eine Kaffee-Portionenkapsel bekannt, welche näherungsweise eine Würfelform aufweist, aus Kunststoff gefertigt ist und im Unterschied zu den bekannten becherförmigen Kapseln keinen auf der Ebene der einen (oberseitigen) Deckfläche umlaufenden Kragen aufweist. Ein solcher umlaufender Kragen wird bei Kapselsystemen gemäss dem Stand der Technik unter anderem zum Verschliessen der Kapsel durch einen eine als Deckel dienende Folie benötigt. Beim Verschliessen mittels Ultraschallschweissen braucht es den Kragen, um einen Energierichtungsgeber unterzubringen. Wird die Kapsel durch thermisches Versiegeln verschlossen, ist der Kragen nötig, damit der Deckel auf einer genügend grossen Fläche aufliegt. Im Gegensatz dazu wird gemäss WO 2010/118543 ein gewölbter Deckel verwendet, und das Verschliessen erfolgt bspw. mittels Ultraschall-Trennschweissen. Die gemäss der Lehre der WO 2010/118543 hergestellte Kapsel hat demnach unabhängig von ihrer ("Würfel"-) Form eine zwischen den durch die Deckfläche definierten Ebenen umlaufende, einen nur minimalen Kragen bildende Schweissbraue, deren Ausdehnung/seitliches Vorstehen jedoch im Vergleich zum Kragen bekannter Kapseln deutlich reduziert ist.

Als Kapselmaterialien sind auch sogenannte Bio-Kunststoffe diskutiert worden. Als solche werden einerseits Kunststoffe bezeichnet, die aus einem nachwachsenden Rohstoff gefertigt sind (sogenannte biobasierte Kunststoffe). Anderseits sind Bio-Kunststoffe Kunststoffe, die biologisch abbaubar sind (sogenannt bioabbaubare Kunststoffe). Die für die Herstellung von Portionenkapseln vorgeschlagenen Kunststoffe sind bioabbaubar und beinhalten teilweise einen Anteil von biobasierten Kunststoffen.

Im vorliegenden Text bedeutet "bioabbaubar" biologisch abbaubar gemäss der Norm EN13432 (Stand: Ende 2019), und "biobasiert" bedeutet "aus nachwachsenden Rohstoffen, nicht auf fossiler Basis gefertigt".

Die erhältlichen Biokunststoffe, insbesondere bioabbaubaren Kunststoffe, haben die Eigenschaft, dass sie schon bei relativ tiefen Temperaturen erweichen und also schon bei tiefen Temperaturen eine gewisse Fliessfähigkeit haben (tiefe Glasübergangstemperatur), dass sie aber doch recht hoch erhitzt werden müssen, bis sie vollständig fliessfähig sind (d.h. die Schmelztemperatur, soweit definiert, ist nicht besonders tief). Das ergibt besondere Herausforderungen beim Schweissen, da für eine verlässliche Verschweissung ein Übergang in einen sehr fliessfähigen Zustand (soweit definiert über der Schmelztemperatur) eine Voraussetzung ist, weshalb die Zeitspanne, während welcher das Material grundsätzlich fliessfähig ist, grösser ist als bei konventionellen Kunststoffen.

Bei der Kapselherstellung ergibt sich daher insbesondere eine Herausforderung für Kapseln, welche nicht eine Siegelfolie als Deckel haben, sondern einen Kunststoffkörper mit einer beispielsweise dreidimensional dimensionierten Form, wie das insbesondere bei Kapseln mit Formen wie in WO 2010/118543 oder beispielsweise WO 2015/096990 beschrieben der Fall ist.

Es ist eine Aufgabe der vorliegenden Erfindung, ein Verfahren zum Herstellen von Kapseln, beispielsweise der in WO 2010/118543 beschriebenen Art, so weiterzuentwickeln, dass eine einfachere Herstellbarkeit bei der Verwendung von Kunststoffen mit einer tiefen Glasübergangstemperatur, speziell bioabbaubaren und/oder biobasierten Kunststoffen und ein verlässliches Verschliessen der Kapsel ermöglicht wird.

Gemäss einem Aspekt der Erfindung weist ein Verfahren zum Herstellen einer Kapsel folgende Schritte auf:
- Zur-Verfügung-stellen eines Kunststoffgrundkörpers, mit einem Bodenbereich, einer umlaufenden Seitenwand und einem an die umlaufende Seitenwand anschliessenden umlaufenden Grundkörper-Kragen;
- Zur-Verfügung-stellen eines Kunststoffdeckels zum Verschliessen der Kapsel, d.h. zum Bilden einer geschlossenen Kapsel mit dem Grundkörper zusammen,;
- Befüllen des Grundkörpers mit einem Extraktionsgut;
- Aufsetzen des Deckels auf den Grundkörper, so, dass eine Befestigungspartie des Deckels auf dem Grundkörper-Kragen aufliegt;
- Befestigen des Deckel-Kragens am Grundkörper-Kragen mittels Ultraschallschweissen;
- Wobei beim Befestigen des Deckel-Kragens eine innere Oberfläche der Befestigungspartie flächig auf einer Kragenoberfläche des Grundkörper-Kragens aufliegt und eine mit mechanischen Schwingungen beaufschlagte Sonotrode mit einem Energierichtungsgeber gegen eine äussere Oberfläche der Befestigungspartie oder des Kragens gedrückt wird, derart, dass durch die Wirkung der mechanischen Schwingungen Kunststoffmaterial des Deckels beziehungsweise des Grundkörper-Kragens von der äusseren Oberfläche her zu verflüssigen beginnt.

Durch dieses Vorgehen wird bewirkt, dass sich eine Schmelze zunächst an der äusseren Oberfläche, am Ort der Berührung zwischen Energierichtungsgeber und Kunststoffmaterial, also quasi von der Rückseite entwickelt. Der Energierichtungsgeber wird daraufhin in das Kunststoffmaterial hinein gedrückt. Erst als Folge davon bildet sich auch eine Schmelze an der Grenzfläche zwischen Grundkörper-Kragen und Befestigungspartie, bspw. indem sich die Schmelze von der Aussenseite zur anderen, inneren Oberfläche hin durch das Material des Deckels bzw. Kragens hindurch frisst. Dies steht im Kontrast zum Stand der Technik, gemäss welchem der Grundkörper oder der Deckel selbst einen Energierichtungsgeber aufweist, weshalb sich ein typischerweise anfangs linienförmiger Kontakt zwischen Grundkörper und Deckel ergibt, wobei das Aufschmelzen des Kunststoffs am Energierichtungsgeber und der Kontaktlinie einsetzt.

Es hat sich - überraschend - gezeigt, dass das weniger effizient scheinende Vorgehen mit dem Entwickeln der Schmelze von der Rückseite her für Kunststoffe wie bspw. Biokunststoffe, die schon bei relativ tiefen Temperaturen ein wenig fliessfähig werden, optimale Resultate ergibt. Bei solchen Materialien ist beim konventionellen Vorgehen mit Energierichtungsgebern am Kunststoff die resultierende Verschweissung oft ungenügend. Eine mögliche Erklärung dafür ist, dass der Energierichtungsgeber bei schon bei tiefen Temperaturen erweichenden Kunststoffen schon zu einem frühen Zeitpunkt im Schweissvorgang seine Wirksamkeit verliert, weil er zu weich ist, und dass daher die Energieabsorption ungenügend ist. Auch kann ein weiter innenliegender Energierichtungsgeber am Kunststoff eine Schwachstelle bilden, weil dort das Material stark verformt und aufgeschmolzen ist.

Es kann insbesondere vorgesehen sein, dass der Energieeintrag von der Deckelseite her erfolgt, d.h. dass die Sonotrode beim Befestigen des Deckel-Kragens gegen die Befestigungspartie gedrückt wird, während der Grundkörper in einem Werkzeug (Amboss) abgestützt wird. Es ist dann das Kunststoffmaterial des Deckels, welches zunächst an der äusseren Oberfläche verflüssigt wird, bis sich die Schmelze auch an der Grenzfläche mit dem Grundkörper-Kragen gebildet hat, bspw. indem sie sich von der äusseren Oberfläche her bis dahin durchgefressen hat, und durch übertragene Wärme Material des Kragens mit-verflüssigt. Diese Anordnung ist im Vergleich zur umgekehrten Anordnung (Einwirken des Ultraschalls von der Grundkörper-Seite her, also von unten) oft vorteilhaft, insbesondere weil der Grundkörpers ja befüllt ist und bei einer Einwirkung des Ultraschalls direkt auf den Grundkörper sichergestellt werden muss, dass die Befüllung nicht beeinträchtigt wird. Ein Einwirken des Ultraschalls von unten her könnte im Übrigen auch bei der praktischen Umsetzung Probleme verursachen, da es aus Stabilitätsgründen nicht ohne Weiteres möglich ist, eine Sonotrode entsprechend passend zu dimensionieren.

Der Energierichtungsgeber an der Sonotrode kann ähnlich wie Energierichtungsgeber von zu verschweissenden Kunststoffteilen die Form einer Rippe haben, beispielsweise mit einem V-förmigen Profil. Eine solche Rippe kann parallel zum Kragenverlauf umlaufend angeordnet sein. Auch mehrere bspw. zwei, zueinander parallele Rippen sind denkbar. Auch andere Energierichtungsgeberformen sind denkbar, bspw. in der Form einer umlaufenden Anordnung von einzelnen hügelartigen Erhebungen etc.

Die aneinander anliegenden Oberflächenpartien des Grundkörper-Kragens einerseits und der Befestigungspartie des Deckels andererseits können insbesondere eben und parallel zueinander sein, so dass sich ein flächiger Kontakt ergibt. Sie sind also insbesondere frei von Energierichtungsgebern oder anderen Erhebungen oder Vertiefungen.

In Ausführungsformen wird anschliessend an das Verschweissen eine äussere Partie des gemeinsamen Kragens, der aus dem Kragen des Grundkörpers und der damit verschweissten Befestigungspartie entsteht, abgetrennt, bspw. durch Stanzen. In einer Gruppe von besonderen Ausführungsformen geschieht das so, dass der Bereich, auf den während des Verschweissens der Energierichtungsgeber einwirkte - also quasi der Kernbereich der Verschweissung - mit abgetrennt wird. Mit anderen Worten findet das Abtrennen radial-innerhalb der Position des Energierichtungsgebers statt, d.h. näher bei der Fläche, die durch die umlaufende Seitenwand definiert wird.

Das Kunststoffmaterial des Deckels und dasjenige des Grundkörpers können identisch sein. Es ist aber auch möglich, dass der Deckel aus einem Kunststoff anderer Zusammensetzung besteht, der jedoch mit den Grundkörper-Kunststoff verschweissbar ist.

Das Kunststoffmaterial des Deckels und/oder des Bechers kann insbesondre ein Biokunststoff sein. Es kann insbesondere ein bioabbaubarer Kunststoff sein. Ergänzend oder alternativ kann das Kunststoffmaterial einen biobasierten Kunststoff mindestens in Anteilen enthalten.

Gemäss einem zweiten Aspekt wird entsprechend eine mit einem Extraktionsgut gefüllte Portionenkapsel für die Herstellung eines Brüherzeugnisses zur Verfügung gestellt, welche aufweist:
- Einen Grundkörper aus einem biologisch abbaubaren Kunststoff, mit einem Bodenbereich und einer umlaufenden Seitenwand;
- Eine Befüllung mit einem Extraktionsgut oder Extrakt, insbesondere gemahlenem Bohnenkaffee und
- einen am Grundkörper befestigten Deckel aus dem biologisch abbaubaren Kunststoff, aus dem auch der Grundkörper gefertigt ist;
- wobei der Deckel mit dem Grundkörper verschweisst ist, insbesondere entlang eines umlaufenden Kragens.

Der zweite Aspekt beruht auf der Erkenntnis, dass entgegen der bisherigen Ansicht auch mit Biokunststoffen eine Kapsel mit einem Deckel herstellbar und insbesondere verschliessbar ist, welcher Deckel nicht einfach eine Siegelfolie darstellt, sondern ein dreidimensionaler rigider Körper ist. Eine Befestigung kann insbesondere mit dem Verfahren nach dem ersten Aspekt geschehen.

Eine solche Kapsel nach dem zweiten Aspekt kann insbesondere wie vorstehend für den ersten Aspekt beschriebenen ausgebildet und hergestellt sein.

Sie kann - das gilt für alle Ausführungsformen, auch des ersten Aspekts - insbesondere so ausgebildet sein, dass der Grundkörper und der Deckel zusammen das Extraktionsgut vollständig umschliessen, ohne bspw. durch eine Folie oder dergleichen abgedeckte Öffnung. Sie kann insbesondere hermetisch und sauerstoffdicht sein, bspw. indem sie eine geeignete Diffusionsbarriere aufweist. Sie kann insbesondere die in diesem Text beschriebene Form mit einem rechteckigen Querschnitt haben. Der Deckel kann insbesondere - wie in diesem Text beschrieben - verschieden von einer blossen Folie oder Platte als dreidimensionales Objekt ausgebildet sein und bspw. eine Wölbung nach aussen bilden.

Des Grundkörper und/oder der Deckel - das gilt wie generell Nachstehendes ebenfalls für alle Aspekte - kann durch Spritzguss oder Thermoformen hergestellt sein. Das Material kann in Ausführungsformen ein marktüblicher Biokunststoff sein, bspw. Ecovio von BASF, einem Compound aus einem bioabbaubaren Polyester (Polybutylenadipat-terephthalat) und Polylactid.

Grundkörper und Deckel können insbesondere nebst dem Biokunststoff auch eine Diffusionssperrschicht aufweisen, wodurch die Kapsel auch ohne Umverpackung aromadicht ist. Ein Beispiel für eine Diffusionssperrschicht ist PVOH (PolyVinylalkohol).

In Ausführungsformen können Grundkörper und/oder Deckel bspw. als Mehrschichtsystem mit Biokunststoff(bspw. Ecovio)/PVOH/Biokunststoff vorliegen, wobei PVOH die Diffusionssperrschicht bildet. Insbesondere für tiefziehbare Schichtsysteme kann zwischen die PVOH-Schicht und den Biokunststoff auch eine sogenannte tie-Schicht, d.h. eine Haftschicht angeordnet sein, so dass der Aufbau dann Biokunststoff/tie/PVOH/tie/Biokunststoff sein kann. Bioabbaubare tie-Schichten sind inzwischen bekannt und am Markt erhältlich, bspw. als natürliche Wachse.

In Ausführungsformen zeichnet sich der Deckel dadurch aus, dass er radial-innerhalb von einem umlaufenden Deckel-Kragen, der während des Verschweissens die Befestigungspartie bildet, eine Wölbung nach aussen bildet, wobei der umlaufende Deckel-Kragen in seiner Dimensionierung auf den Grundkörper-Kragen abgestimmt ist. Der Deckel unterscheidet sich gemäss diesen Ausführungsformen also von einem flachen, bspw. folien- oder plattenartigen Deckelelement. Er ist ein dreidimensional geformter Körper.

Die Form des Deckels kann in solchen Ausführungsformen von aussen nach innen den Deckel-Kragen, einen gekrümmten Übergangsbereich und einen mittigen flachen Bereich aufweisen, der die eigentliche oberseitige Deckfläche bildet. Ein solcher flacher Bereich ist aufgrund des Übergangsbereichs, der die Wölbung bewirkt, von der Ebene des Deckel-Kragens nach aussen abgesetzt. Der Übergangsbereich kann bspw. S-förmig gekrümmt sein oder stetig von einer in einem Winkel zur Kragenebene stehenden äusseren Partie hin zum mittigen flachen Bereich gekrümmt verlaufen. Dabei ist die Dimensionierung beispielsweise so gewählt, dass der mittige flache Bereich optisch dominiert, indem er bspw. gleich gross wie oder nur unwesentlich (bspw. maximal 10%) kleiner als die Bodenfläche ist. Es kann insbesondere bei einer Ausführung der Kapsel als insgesamt quader- oder würfelförmig vorgesehen sein, dass dieser flache Bereich mehr als 60% des Durchmessers und entsprechend mindestens 40% der Fläche, einnimmt.

Der Deckel-Kragen wird im Allgemeinen eine umlaufende, zur Deckelseite hin gewandte Fläche bilden, die sich von einer Aussenkante des Kragens bis zu einem Ansatz der Wölbung erstreckt. Es kann in Ausführungsformen vorgesehen sein, dass der Ansatz der Wölbung im Vergleich zu der Partie der Seitenwand, an welche der Kragen anschliesst, nach innen versetzt ist. Ein solcher Versatz kann bspw. mindestens 0.2 mm betragen.

Die Herstellung von Grundkörper und/oder Deckel kann bspw. über Spritzguss oder über ein Tiefziehverfahren erfolgen.

In Ausführungsformen hat der Grundkörper im Bereich des Kragens einen im Wesentlichen rechteckigen, bspw. quadratischen Querschnitt. Die Kapsel, die aus Grundköper und Deckel gebildet wird, kann bis auf den nach der Fertigstellung verbleibenden Kragen ungefähr würfelförmig sein. Auch der Kragen selbst - bspw. dessen Aussenkante - kann im Wesentlichen rechteckig, insbesondere quadratisch sein. 'Im Wesentlichen rechteckig' bzw. ,im Wesentlichen quadratisch' schliesst insbesondere abgerundete nicht aus; ebenso schliesst "ungefähr würfelförmig" abgerundete Kanten und Ecken nicht aus. Die Würfelform schliesst auch eine - bspw. bei tiefgezogenen Grundkörpern herstellungsbedingte - Neigung der umlaufenden Seitenflächen zur Achse (Senkrechten auf die Boden- und/oder Deckelfläche) von bspw. maximal 3°, insbesondere maximal 2° oder maximal 1.5° nicht aus.

Es ist alternativ aber auch möglich, dass der Grundkörper eine Becherform der an sich bekannten Art mit einer konischen oder eventuell rotationszylindrischen umlaufenden Seitenwand hat.

Eine Wandstärke im Bereich des Grundkörpers beträgt insbesondere zwischen 0.2 mm und 0.4 mm, bspw. zwischen 0.25 mm und 0.35 mm. Dasselbe kann auch für die Wandstärke des Deckels gelten. In einer Ausführungsform entspricht die Wandstärke des Deckels ungefähr der Wandstärke des Grundkörpers.

Eine mit einem Verfahren gemäss dem ersten Aspekt herstellbare Kapsel mit einem Extraktionsgut weist auf:
- Einen Grundkörper aus einem Kunststoff, insbesondere Bio-Kunststoff, mit einem Bodenbereich und einer umlaufenden Seitenwand;
- Eine Befüllung mit einem Extraktionsgut oder Extrakt, insbesondere gemahlenem Bohnenkaffee und
- einen am Grundkörper befestigten Deckel aus einem Kunststoff, insbesondere Bio-Kunststoff;
- wobei der Deckel entlang eines umlaufenden Kragens am Grundkörper befestigt ist,
- und die Kapsel mit einem Verfahren der beschriebenen Art hergestellt ist.

Der Grundkörper-Kragen und/oder der Deckel-Kragen kann/können mit einem Übermass zur Verfügung gestellt werden. Anschliessend an das Verschweissen oder gleichzeitig mit dem Verschweissen werden die überstehenden Bereiche dann abgetrennt, bspw. durch Ultraschall oder durch Stanzen.

Ausführungsbeispiele der Erfindung werden nachfolgend anhand von Zeichnungen beschrieben. In den Zeichnungen bezeichnen gleiche Bezugszeichen gleiche oder analoge Elemente. Die Zeichnungen sind nicht massstäblich und zeigen teilweise einander entsprechende Elemente in von Figur zu Figur unterschiedlichen Grössen. Es zeigen:
- Fig. 1 eine Kapsel;
- Fig. 2 einen Grundkörper für die Herstellung einer Kapsel gemäss Fig. 1;
- Fig. 3 einen Deckel gemäss dem Stand der Technik, angeschnitten gezeichnet;
- Fig. 4 einen weiteren Deckel gemäss dem Stand der Technik, ebenfalls angeschnitten gezeichnet,;
- Fig. 5 eine nur ausschnittweise dargestellte Anordnung mit Grundkörper, Deckel, Amboss und Sonotrode;
- Fig. 6 die Anordnung gemäss Fig. 5 während des Ultraschallschweissverfahrens; und
- Fig. 7 Grundkörper und daran geschweisster Deckel, ebenfalls nur ausschnittweise gezeichnet, nach dem Ultraschallschweissvorgang und vor dem Abtrennen des äusseren Teils des Kapselkragens.

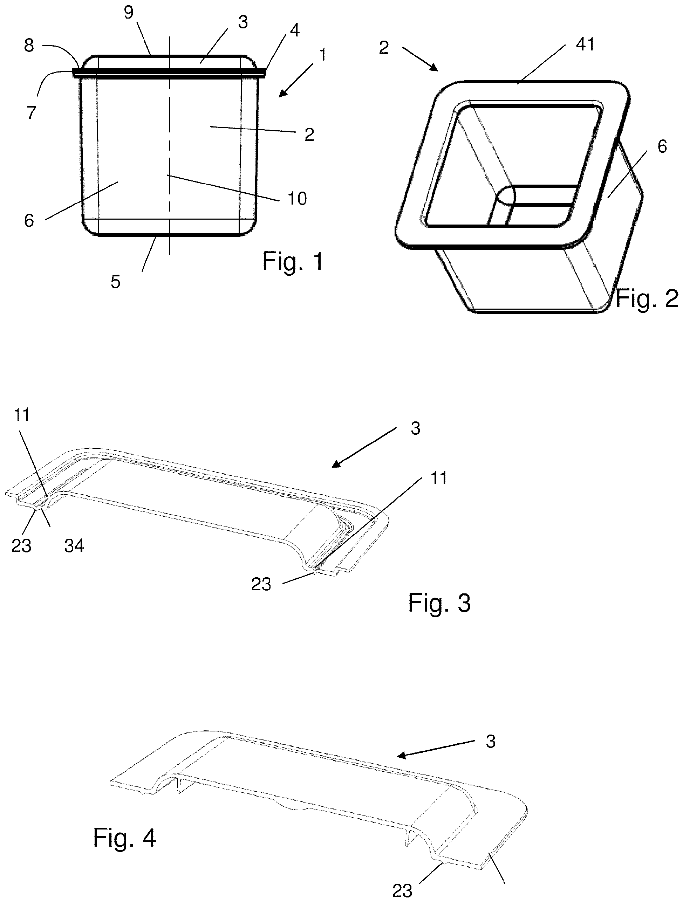

Die Kapsel 1 gemäss **Figur 1** hat im Wesentlichen die Form eines Würfels mit gerundeten Kanten. Die Ausdehnung nimmt jedoch zur oben liegenden Seite hin leicht zu, so dass die Kapsel streng mathematisch gesehen eine Pyramidenstumpfform hat. Der Neigungswinkel der in der Figur seitlichen Flächen gegenüber der Senkrechten zur Grundfläche 5 - gemeint ist natürlich diejenige zur Grundfläche senkrechte Ebene, die durch die Kante zwischen der Grundfläche und der entsprechenden seitlichen Fläche verläuft - ist sehr klein, er beträgt vorzugsweise höchstens 2° zum Beispiel nur ca. 1°. Ausserdem entspricht die Höhe der Kapsel über der Grundfläche näherungsweise der Länge der Grundflächenkanten.

Die Kapsel weist einen Grundkörper (oder Becher) 2 und einen entlang eines umlaufenden Kragens 4 daran befestigten Deckel 3 auf. Der Grundkörper bildet einen Kapselboden 5 und eine umlaufende Seitenwand 6, welche an ihrem in Bezug auf axiale Richtungen (Achse 10) äusseren, in der Figur oberen, Ende durch den Kragen 4 abgeschlossen wird. Der Deckel ist nach aussen gewölbt, indem die zum Kapselboden 5 im Wesentlichen parallele Deckelfläche 9 im Vergleich zum umlaufenden Kragen 4 nach aussen versetzt ist.

**Figur 2** zeigt den Grundkörper 2 (Becher) vor der Befüllung und vor dem Verschliessen. Der Grundkörper-Kragen 41 weist eine Ausdehnung auf, welche grösser ist als diejenige des Kragens 4 der fertigen Kapsel.

Kapseln der in Figur 1 gezeichneten Art und Grundkörper 2 in der in Figur 2 gezeichneten Art sind auch schon aus dem Stand der Technik bekannt, beispielsweise aus der WO 2015/096990.

Bei der Kapselherstellung wird zunächst der Grundkörper 2 mit dem Extraktionsgut befüllt, und anschliessend wird der Deckel 3 positioniert. Daraufhin findet ein Ultraschallschweissen statt. Bei der Verwendung von konventionellen Kapselmaterialien wird der Deckel 3 oder der Grundkörper 2 zu diesem Zweck im Bereich des umlaufenden Kragens mit einem Energierichtungsgeber versehen, der bspw. die Form einer umlaufenden Rippe haben kann.

**Figuren 3 und 4** zeigen je ein Ausführungsbeispiel eines Deckels 3 gemäss dem Stand der Technik. Der Deckel 3 gemäss Fig. 3 ist durch Tiefziehen hergestellt. Der im Bereich des Deckel-Kragens 34 ausgeformte Energierichtungsgeber 23 hat die Form einer umlaufenden Rippe, die im Querschnitt ungefähr V-förmig ist. Auf der Rückseite (also auf der äusseren Oberfläche) bildet sich dementsprechend eine umlaufende Nut 11. Fig. 4 zeigt einen nicht durch Tiefziehen, sondern durch Spritzgiessen hergestellten Deckel 3 mit Energierichtungsgeber 23.

Es zeigt sich, dass bei der Verwendung von Kapsel- und Deckelmaterialien, die schon bei relativ tiefen Temperaturen erweichen, die Verschweissung bei der Verwendung von Deckeln gemäss Fig. 3 oder 4 nicht immer und verlässlich gute Resultate bringt.

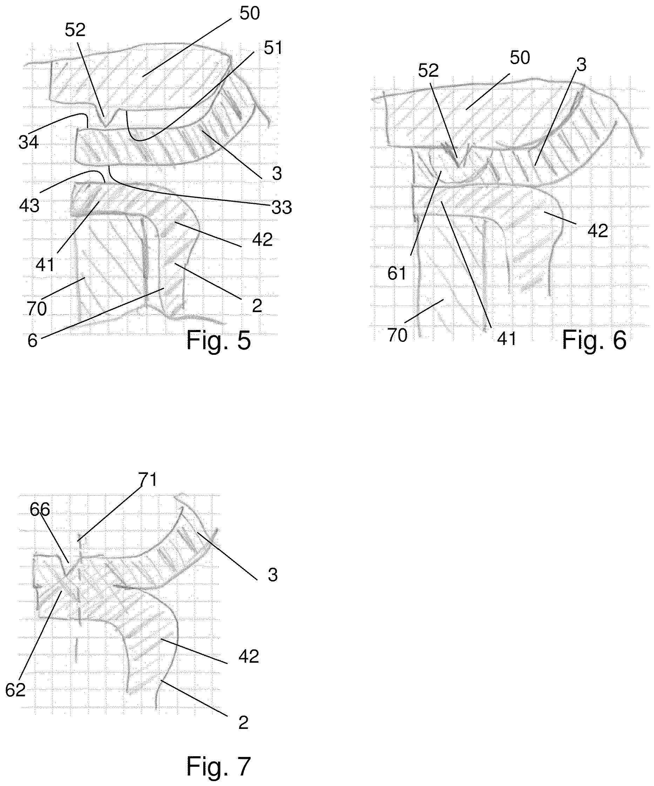

**Figuren 5-7** illustrieren das erfindungsgemässe Vorgehen anhand eines Beispiels. Der Grundkörper 2 aus einem bioabbaubaren Kunststoff weist wie auch in Fig. 2 illustriert einen umlaufenden Grundkörper-Kragen 41 auf, welcher an einer Oberseite (Kragenoberfläche 43) im Wesentlichen flach ist. Im Übergang zwischen umlaufender Seitenwand 6 und Grundkörper-Kragen 41 bildet der Grundkörper eine optionale Verdickung 42 nach radial-innen aus, welche versteifend wirkt.

Der Deckel 3 ist wie der Grundkörper rigid und aus demselben bioabbaubaren Kunststoff gefertigt und weist eine ebenfalls flache innere Oberfläche 33 auf, die für die Befestigung flächig auf der Kragenoberfläche 43 aufliegt, während der Grundkörper-Kragen 41 durch einen Amboss 70 abgestützt wird. Für die Verschweissung wird eine Sonotrode 50 unter Ultraschalleintrag gegen die äussere Oberfläche 34 des Deckelkragens gedrückt. Die Sonotrode 50 weist einen Energierichtungsgeber 52 auf. Dieser ist als über die distale Wirkfläche 51 hinausragende Erhebung ausgebildet, nämlich als umlaufende, im Querschnitt ungefähr V-förmige Rippe.

Wie in Fig. 6 illustriert wird der Energieeintrag durch die Sonotrode 50 bewirken, dass Material des Deckels 3 zunächst entlang des Kontakts mit dem Energierichtungsgeber 52 verflüssigt wird, so dass dieser in das Material eindringen kann. Es bildet sich eine Schmelze 61, die sich durch den steten Energieeintrag vom Ort des Energierichtungsgeber her ausbreitet und von der Rückseite zur Vorderseite hin durch das Material des Deckelkragens und ins Material des Grundkörper-Kragens hinein frisst. Ergänzend oder alternativ kann auch an der Grenzfläche zwischen Deckelkragen und Grundkörper-Kragen Energieabsorption stattfinden. Im Vergleich zum Stand der Technik resultiert eine relativ breitflächige Verschweissung 62 (siehe Fig. 7). Nach dem Entfernen der Sonotrode kann auch eine Vertiefung 66 am Ort des Energierichtungsgebers zurückbleiben.

Anschliessend an das Verschweissen kann ein nach radial-aussen vorstehender Teil des Kragens abgetrennt werden, beispielsweise durch stanzen, optional mit Ultraschallunterstützung, ultraschallschneiden, etc. Gemäss einer Option kann das an einer Stelle geschehen, die radial-innerhalb der Position ist, an welcher der Energierichtungsgeber während des Ultraschallschweissens angegriffen hat. In Figur 7 bezeichnet die Linie 71 die Position, an welcher abgetrennt wird. Sie liegt radial-innerhalb (d.h. im Ausschnitt von Fig. 7 rechts) der Position des Energierichtungsgebers, welche eine Markierung in Form der Vertiefung 66 hinterlassen hat. Vorteil dieser Lösung ist, dass ein optisch ansprechenderer Kragen resultiert. Ausserdem ist die resultierende Form am Ort des Einwirkens des Energierichtungsgebers nicht immer genau reproduzierbar. Durch das Abtrennen wird bewirkt, dass diese nicht immer genau reproduzierbare Form Teil der Kapsel ist und unter Umständen Probleme beim Zusammenspiel mit der Brühkammer beim Handling und beim Brühprozess verursachen kann.

## Patentansprüche

1. Verfahren zum Herstellen einer mit einem Extraktionsgut gefüllten Portionenkapsel (1) für die Herstellung eines Brüherzeugnisses, aufweisend die folgenden Schritte:
- Zur-Verfügung-steilen eines Grundkörpers (2) aus einem Kunststoff, mit einem Bodenbereich (5), einer umlaufenden Seitenwand (6) und einem an die umlaufende Seitenwand anschliessenden umlaufenden Grundkörper-Kragen (41);
- Zur-Verfügung-stellen eines Deckels (3) aus einem Kunststoff;
- Befüllen des Grundkörpers (2) mit einem Extraktionsgut;
- Aufsetzen des Deckels (3) auf den Grundkörper (2), so, dass eine Befestigungspartie des Deckels auf dem Grundkörper-Kragen (41) aufliegt; und
- Befestigen des Deckel-Kragens am Grundkörper-Kragen mittels Ultraschallschweissen,
**dadurch gekennzeichnet,**
- **dass** beim Befestigen des Deckel-Kragens eine innere Oberfläche (33) der Befestigungspartie flächig auf einer Kragenoberfläche (43) des Grundkörper-Kragens aufliegt und eine mit mechanischen Schwingungen beaufschlagte Sonotrode (50) mit einem Energierichtungsgeber (52) gegen eine äussere Oberfläche (34) der Befestigungspartie oder des Grundkörper-Kragens gedrückt wird, derart, dass durch die Wirkung der mechanischen Schwingungen Kunststoffmaterial des Deckels beziehungsweise des Grundkörper-Kragens an der äusseren Oberfläche zu verflüssigen beginnt.

2. Verfahren nach Anspruch 1, wobei die Sonotrode (50) beim Befestigen des Deckel-Kragens (41) gegen die Befestigungspartie gedrückt wird, während der Grundkörper (2) von einem Werkzeug (70) abgestützt wird.

3. Verfahren nach Anspruch 1 oder 2, wobei die innere Oberfläche (33) der Befestigungspartie und die Kragenoberfläche (43) des Grundkörper-Kragens eben und parallel zueinander sind.

4. Verfahren nach einem der vorangehenden Ansprüche, wobei der Energierichtungsgeber (52) die Form einer umlaufenden Rippe hat.

5. Verfahren nach einem der vorangehenden Ansprüche, wobei anschliessend an das Verschweissen eine äussere Partie eines gemeinsamen Kragens (4), der aus dem Grundkörper-Kragen (41) und der damit verschweissten Befestigungspartie entsteht, abgetrennt wird.

6. Verfahren nach Anspruch 5, wobei die äussere Partei so abgetrennt wird, dass der Bereich mit abgetrennt wird, auf den der Energierichtungsgeber während des Verschweissens eingewirkt hat.

7. Verfahren nach einem der vorangehenden Ansprüche, wobei der Deckel (3) und der Grundkörper (2) aus einem selben Kunststoff gefertigt sind.

8. Verfahren nach einem der vorangehenden Ansprüche wobei der Deckel (3) und/oder der Grundkörper (2) aus einem bioabbaubaren Kunststoff gefertigt sind.

9. Verfahren nach Anspruch 8, wobei Deckel und Grundkörper eine Diffusionssperrschicht, bspw. aus einem PVOH, aufweisen.

10. Verfahren nach einem der vorangehenden Ansprüche, wobei der Deckel (3) formsteif ist.

11. Verfahren nach Anspruch 10, wobei der Deckel (3) radial-innerhalb von einem umlaufenden Deckel-Kragen, der während des Verschweissens die Befestigungspartie bildet, eine Wölbung nach aussen bildet.

12. Verfahren nach einem der vorangehenden Ansprüche, wobei der Grundkörper im Bereich des Grundkörper-Kragens einen im Wesentlichen rechteckigen Querschnitt hat.

13. Mit einem Extraktionsgut gefüllte Portionenkapsel (1) aus einem Kunststoff, für die Herstellung eines Brüherzeugnisses, aufweisend:
- Einen Grundkörper (2) aus einem Kunststoff, insbesondere Bio-Kunststoff, mit einem Bodenbereich (5) und einer umlaufenden Seitenwand (6);
- Eine Befüllung mit einem Extraktionsgut oder Extrakt, insbesondere gemahlenem Bohnenkaffee, und
- einen am Grundkörper befestigten Deckel (3) aus einem Kunststoff, insbesondere Bio-Kunststoff;
- wobei der Deckel entlang eines umlaufenden Kragens am Grundkörper befestigt ist,
- und wobei die Portionenkapsel mit einem Verfahren nach einem der vorangehenden Ansprüche hergestellt ist.
